# EUROPEAN PATENT SPECIFICATION

(11) **EP 4 421 929 B1**
(45) Date of publication and mention of the grant of the patent: **10.12.2025**
(21) Application number: 23857631.8
(22) Date of filing: 16.08.2023
(51) Int. Cl.: B29C 63/04, H01M 10/04, B65H 35/00, H01M 4/04, B29L 31/34, B29L 31/00, B29C 55/04

(54) **TAPING DEVICE FOR STACKED ELECTRODE ASSEMBLY AND METHOD FOR TAPING STACKED ELECTRODE ASSEMBLY**
VORRICHTUNG ZUM AUFBRINGEN EINES BANDES FÜR EINE GESTAPELTE ELEKTRODENANORDNUNG UND VERFAHREN ZUM AUFBRINGEN EINES BANDES AUF EINE GESTAPELTE ELEKTRODENANORDNUNG
DISPOSITIF D'APPLICATION DE RUBAN ADHESIF POUR ENSEMBLE D'ÉLECTRODES EMPILÉES ET PROCÉDÉ D'APPLICATION DE RUBAN ADHESIF POUR ENSEMBLE D'ÉLECTRODES EMPILÉES

(30) Priority: 24.08.2022 KR 20220106147
(43) Date of publication of application: 28.08.2024
(73) Proprietor: LG Energy Solution, Ltd., Seoul 07335 (KR)
(72) Inventor: JANG, Chang Woo, Daejeon 34122 (KR)
(74) Representative: Goddar, Heinz J.
(86) International application number: PCT/KR2023/012068
(87) International publication number: WO 2024/043597

(56) References cited:
- JP-A- 2018 073 631
- KR-A- 20120 069 905
- KR-A- 20120 069 905
- KR-A- 20200 075 259
- KR-A- 20210 053 574
- KR-A- 20210 145 534
- KR-B1- 101 840 859
- KR-B1- 102 262 436

## Description

### Technical Field

The present invention relates to a taping device for a stacked electrode assembly and a method for taping a stacked electrode assembly, and specifically, relates to, a taping device and method for a stacked electrode assembly for guiding movement of a tape, and pressurizing and rolling the tape to adhere to the stacked electrode assembly in a taping process for a stacked electrode assembly.

### Background Art

Secondary batteries also attract attention as power sources of electric vehicles (EV), hybrid electric vehicles (HEV), parallel hybrid electric vehicles (PREV), and the like, which are proposed as a solution to air pollution from existing gasoline and diesel vehicles using fossil fuels, where in medium to large-sized devices such as automobiles, medium to large-sized battery modules electrically connecting multiple battery cells are used due to the need for high output and large capacity.

However, since it is desirable for medium to large-sized battery modules to be manufactured as small and light as possible, rectangular batteries, pouch-type batteries, and the like that can be packed with a high integration degree and are light in comparison to capacity are mainly used as battery cells for medium to large-sized battery modules.

The electrode assembly is accommodated in a case of the battery cell, which is generally classified according to whether the electrode assembly of the positive electrode/separator/negative electrode structure forms any structure.

Representatively, it can be classified into a jelly-roll (wound type) electrode assembly composed of a structure winding long sheet-shaped positive electrodes and negative electrodes in a state where separators are interposed therebetween, a stacked (laminated type) electrode assembly in which a plurality of positive electrodes and negative electrodes cut in units with a predetermined size are sequentially laminated in a state where separators are interposed therebetween, and a stacked/folded electrode assembly.

The stacked electrode assembly has a structure in which a plurality of electrodes and a plurality of separators are alternately laminated.

In the case of such a stacked electrode assembly, the stacked electrode assembly is manufactured by, on a magazine or jig having a width corresponding to the horizontal or vertical width of the separator, repeatedly performing a step of laminating the separator, wherein the separator is usually manufactured to have wider horizontal and vertical widths than those of the electrode, and laminating the electrode thereon.

Unlike the stacked/folded electrode assembly, the relative position between the electrode and the separator is not fixed, so that a method of covering the side of the electrode assembly using a tape is generally used to fix the relative position between the respective layers.

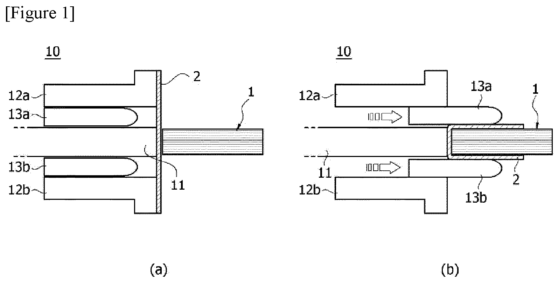

Figure 1 is a diagram for explaining a process of taping a tape (2) to a stacked electrode assembly (1) using a conventional stacked electrode assembly taping device (10).

Referring to Figure 1, in a state where the upper and lower ends of the tape are vacuum-adsorbed by a vacuum adsorption part (12a, 12b), the upper oval mechanism part (13a) and the lower oval mechanism part (13b) are moved forward toward the stacked electrode assembly (1).

The upper oval mechanism part (13a) presses and fixes the tape (2) to the upper surface of the stacked electrode assembly (1) while pushing the upper end of the tape toward the upper surface of the stacked electrode assembly (1). The lower oval mechanism part (13b) presses and fixes the tape (2) to the lower surface of the stacked electrode assembly (1) while pushing the lower end of the tape (2) to the lower surface of the stacked electrode assembly (1).

However, in a state where the tape (2) is not properly adsorbed to the vacuum adsorption part (12a, 12b), when the upper oval mechanism part (13a) and the lower oval mechanism part (13b) push the tape (2) toward the stacked electrode assembly (1), there may be a phenomenon that the tape (2) is separated from the stacked electrode assembly (2), or the tape (2) wrinkles even if it is taped to the stacked electrode assembly.

Therefore, conventionally, in the process of attaching the tape (2) to the stacked electrode assembly (1), there was a problem that the separator was folded, or the appearance defects of the battery cell occurred due to tape wrinkles and bubble generation, and the like. Particularly, problems such as folding of the separator can be caused in the future in the stacked electrode assembly (1) that is not accurately fixed with tape.

KR20120069905A and KR20210053574A provide yet other examples of taping devices for taping stacked electrode assemblies.

Accordingly, there is a need for a taping device and method that can effectively fix the stacked electrode assembly (1).

### Disclosure

### Technical Problem

The present invention is intended to solve problems with conventional taping devices.

Through one example of the present invention, it is intended to provide a taping device and a taping method for a stacked electrode assembly, in a taping process for a stacked electrode assembly, guiding movement of a tape, and pressurizing and rolling the tape to adhere to the stacked electrode assembly.

Through one example of the present invention, it is intended to provide a taping device and a taping method for a stacked electrode assembly capable of preventing a tape from being separated from a device main body, as a gripper part holds the upper and lower ends of the tape and guides movement of the tape while moving forward toward the stacked electrode assembly.

Through one example of the present invention, it is intended to provide a taping device and a taping method for a stacked electrode assembly capable of preventing wrinkles of a tape and bubble generation when the tape is taped to the stacked electrode assembly, as a pair of pressing members pressurizes and rolls the tape while moving forward toward the stacked electrode assembly to attach the tape to the stacked electrode assembly.

Through one example of the present invention, it is intended to provide a taping device and a taping method for a stacked electrode body capable of improving taping quality by performing taping after tensioning a tape.

Through one example of the present invention, it is intended to provide a taping device and a taping method for a stacked electrode assembly capable of effectively fixing a tape to the attachment position where the tape is stretched, and then effectively guiding the position of the tape for taping by effectively releasing the fixation of the tape.

### Technical Solution

According to the present invention, a taping device is provided as defined in claim 1.

Here, the support part may be referred to as a support device, the gripper part may be referred to as a gripper device, and the taping mechanism part may be referred to as a taping device.

It is preferable that in the initial position of the tape before taping, the support surface supporting the tape in the support part and the vacuum adsorption surface of the vacuum adsorption part form the same plane. The tape before taping may be positioned to have the same vertical plane in a strip shape.

At this time, one side of the tape, which is a pressure-sensitive adhesive side, may be positioned to face the stacked electrode assembly, and the other side, which is a non-pressure-sensitive adhesive side, may be positioned to face the taping device.

In the initial position of the tape before taping, the lateral side of the stacked electrode assembly may be positioned to contact the support surface with the tape interposed therebetween.

In the initial position of the tape before taping, the lateral side of the stacked electrode assembly may be positioned at a certain gap from the tape. This certain gap is filled during the taping process, whereby the central portion of the tape may be attached to the lateral side of the stacked electrode assembly.

It is preferable that the vacuum adsorption part and the gripper part are provided in pairs symmetrically up and down with respect to the support part.

It is preferable that the support part and the vacuum adsorption part are integrally formed in an E shape, and the gripper part and the taping mechanism part are provided to be movable back and forth with respect to the support part and the vacuum adsorption part.

It is preferable that the gripper part is provided to tension the tape as it advances from the initial position of the tape before taping to move to an attachment position for taping. Then, it is preferable that at least a part of the taping is performed in a tensioned state.

It is preferable that the gripper part deforms the upper portion and the lower portion of the tape from a vertical shape to an oblique line shape with respect to the support part while moving to the attachment position. Because the tape is positioned in the oblique line shape, the position of the tape for taping may be guided. That is, the fixation to the end of the tape is released in an oblique line position rather than a vertical position, so that it is possible to effectively prevent the tape from being folded upon taping.

It is preferable that the gripper part comprises a gripper surface on which the end of the tape is seated, and a gripper bar provided to be foldable with respect to the gripper surface, thereby fixing and unfixing the end of the tape.

Since the tape is fixed while the front and back sides of the tape are pressed through the gripper bar, the tape may be effectively fixed even if a force pulling the tape in the longitudinal direction acts thereon. This means that the tape can be effectively fixed in conjunction with the vacuum adsorption part fixing the tape by adsorbing it in the thickness direction of the tape. **In** other words, this is because it is not easy to fix the tape while overcoming the force pulling the tape in the longitudinal direction through the vacuum adsorption part.

The gripper part may comprise a guide bar provided to be movable back and forth on the vacuum adsorption part.

It is preferable that the gripper part releases the fixation to the end of the tape after moving to the attachment position. Of course, the fixation of the tape can be released through the vacuum adsorption part just before the tape is moved to the attachment position or after the fixation of the tape is completed through the gripper part.

The taping mechanism part may comprise a moving block provided to move back and forth with respect to the support part; and a pressurizing member provided so that the tape is pressurized while moving back and forth by the moving block, and simultaneously attached to the stacked electrode assembly.

The taping mechanism part may comprise a support bar interposed between the moving block and the pressurizing member, where the pressurizing member may be a roller rotatably provided on the support bar.

It is preferable that the roller is elastically supported to be rotatable with respect to the support bar, and the roller performs the taping while pressurizing and rolling the surface of the stacked electrode body by an elastic restoring force.

Since the taping is performed by pressurizing and rolling, it is possible to significantly reduce the matter in which the tape is folded and attached, or the matter of performing the taping in a state where air is interposed. Particularly, as the pressurizing and rolling are performed by the elastic restoring force, the taping may be performed so that the pressure-sensitive adhesive force is sufficiently generated.

In order to achieve the above-described object, according to one example of the present invention, a taping device for a stacked electrode assembly may be provided, which comprises: a support part provided to correspond to the central portion of the tape to be attached to the stacked electrode assembly and the lateral side of the stacked electrode assembly; a vacuum adsorption part adsorbing and fixing the non-pressure-sensitive adhesive side of the tape; a gripper part provided so that the tape is fixed by operating to grip the end of the tape, and the tape is tensioned by moving from an initial position to an attachment position for attachment of the tape; and a taping mechanism part provided to attach the tape to the upper surface and the lower surface of the stacked electrode assembly by moving along the upper surface and the lower surface of the stacked electrode assembly from the upper portion and the lower portion of the support part.

The gripper part may be provided in a pair to be symmetrical up and down with respect to the support part, and may be provided to additionally fix the upper and lower ends of the tape in addition to the fixation by the vacuum adsorption part.

The vacuum adsorption part may be provided for primary fixation of the tape, and the gripper part may be provided for secondary fixation of the tape. When the fixation of the tape through the gripper is completed, the fixation of the tape may be released through the vacuum adsorption part.

The gripper part may be moved to the attachment position for taping, where the central portion of the tape may be attached to the lateral side of the stacked electrode assembly. As the taping of the upper and lower surfaces of the stacked electrode assembly begins through the taping mechanism part, the fixation of the tape through the gripper may be released.

It is preferable that the gripper part comprises a gripper bar provided to fix the tape by gripping it by folding.

When the gripper part moves from the initial position to the attachment position, the adsorption of the vacuum adsorption part may be released.

It is preferable that when attachment of the tape through the taping mechanism part begins after the gripper part is moved to the attachment position, the fixation of the tape through the gripper part is released.

It is preferable that the gripper part deforms the tape to be tensioned in an oblique line shape having an acute angle with respect to the upper and lower surfaces of the stacked electrode assembly as it moves to the attachment position.

It is preferable that the taping mechanism part comprises a pressurizing member provided to attach the tape to the stacked electrode assembly by rolling and pressurizing as it moves from the initial position to the attachment position.

### Advantageous Effects

Through one example of the present invention, it is possible to provide a taping device and a taping method for a stacked electrode assembly, in a taping process for a stacked electrode assembly, guiding movement of a tape, and pressurizing and rolling the tape to adhere to the stacked electrode assembly.

Through one example of the present invention, it is possible to provide a taping device and a taping method for a stacked electrode assembly capable of preventing a tape from being separated from a device main body, as a gripper part holds the upper and lower ends of the tape and guides movement of the tape while moving forward toward the stacked electrode assembly.

Through one example of the present invention, it is possible to provide a taping device and a taping method for a stacked electrode assembly capable of preventing wrinkles of a tape and bubble generation when the tape is taped to the stacked electrode assembly, as a pair of pressing members pressurizes and rolls the tape while moving forward toward the stacked electrode assembly to attach the tape to the stacked electrode assembly.

Through one example of the present invention, it is possible to provide a taping device and a taping method for a stacked electrode body capable of improving taping quality by performing taping after tensioning a tape.

Through one example of the present invention, it is possible to provide a taping device and a taping method for a stacked electrode assembly capable of effectively fixing a tape to the attachment position where the tape is stretched, and then effectively guiding the position of the tape for taping by effectively releasing the fixation of the tape.

### Description of Drawings

Figure 1 is a diagram for explaining a process of taping a tape to a stacked electrode assembly using a conventional stacked electrode assembly taping device.
Figure 2 schematically illustrates a perspective diagram of a taping device for a stacked electrode assembly according to one example of the present invention.
Figure 3 schematically illustrates the overall structure diagram of a taping device for a stacked electrode assembly according to one example of the present invention.
Figure 4 schematically illustrates an upper structure diagram of a taping device for a stacked electrode assembly according to one example of the present invention.
Figure 5 schematically illustrates an lower structure diagram of a taping device for a stacked electrode assembly according to one example of the present invention.

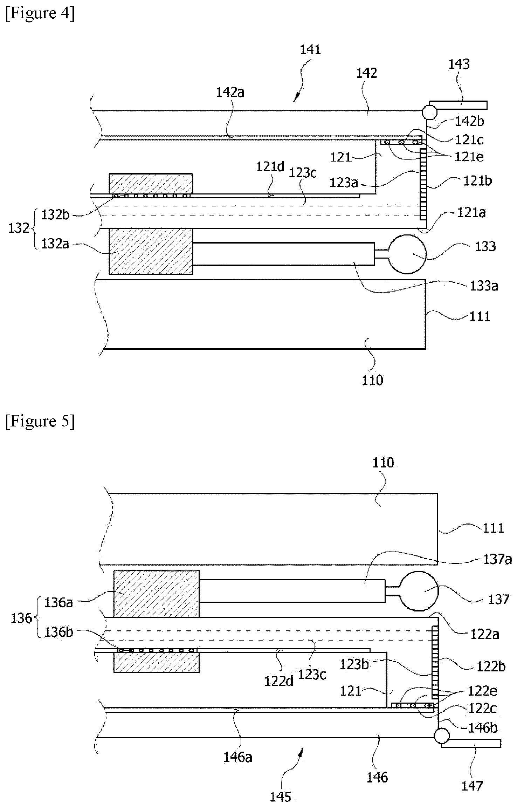

Figure 4 schematically illustrates an operating state diagram of a taping device for a stacked electrode assembly according to one example of the present invention.

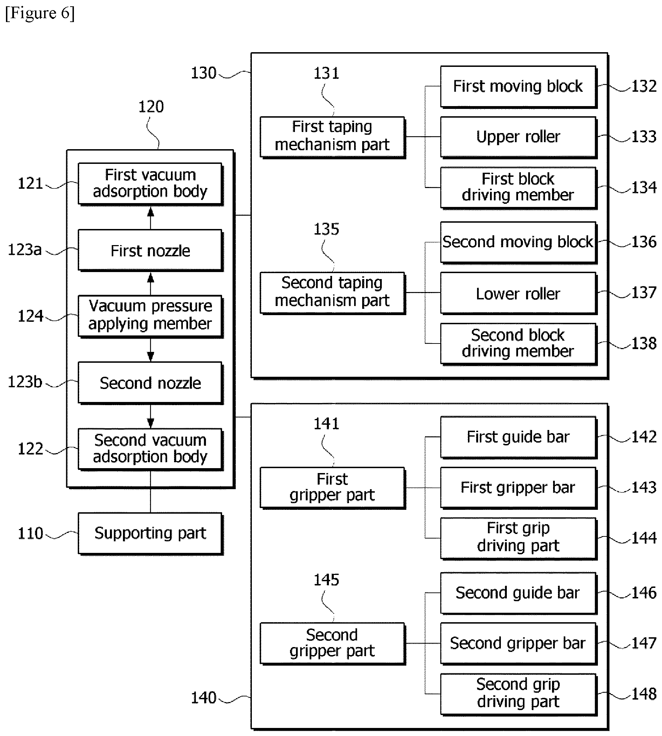

Figure 6 schematically illustrates a configuration diagram of a taping device for a stacked electrode assembly according to one example of the present invention.

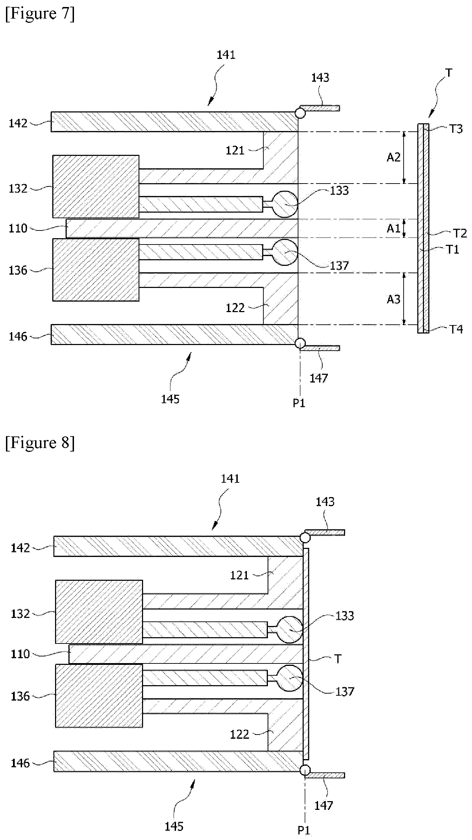

Figure 7 is a diagram for explaining a positional relationship of a tape with respect to a taping device for a stacked electrode assembly according to one example of the present invention.
Figures 8 to 13 schematically illustrate operating state diagrams of a taping device for a stacked electrode assembly according to one example of the present invention.

### Best Mode

The present invention can make various changes and can have various examples, whereby specific examples will be illustrated and described in the drawings.

However, these are not intended to limit the present application to specific embodiments, and it should be understood to include all changes, equivalents, and substitutes included in the spirit and technical scope of the present application. In describing the present application, if it is determined that detailed descriptions of related known technologies may obscure the gist of the present application, the detailed descriptions will be omitted.

The terms such as first or second can be used to describe various components, but the components should not be limited by the terms. The terms are used only to distinguish one component from another.

The terms used in the present application are only used to describe specific examples, which are not intended to limit the present application. Singular expressions include plural expressions unless the context clearly dictates otherwise.

In the present application, it must be understood that the terms such as "comprise" or "have" are intended to designate the presence of features, numbers, steps, operations, components, parts, or combinations thereof described in the specification, but do not exclude in advance the presence or addition possibility of one or more other features, or numbers, steps, operations, components, parts, or combinations thereof.

Therefore, the constitutions shown in examples described in this specification are only the most preferred one example of the present application, and do not represent the entire technical idea of the present application, so that there may be various equivalents and variations which can substitute them at the time of filing the present application.

Also, in the present application, the attached drawings should be understood as being illustrated enlarged or reduced for convenience of explanation.

Hereinafter, with reference to the accompanying drawings, a taping device for a stacked electrode assembly and a method for taping a stacked electrode assembly according to a preferred example of the present invention will be described.

However, the attached drawings are illustrative, and the scope of the taping device for the stacked electrode assembly and the method for taping the stacked electrode assembly of the present application are not limited by the attached drawings.

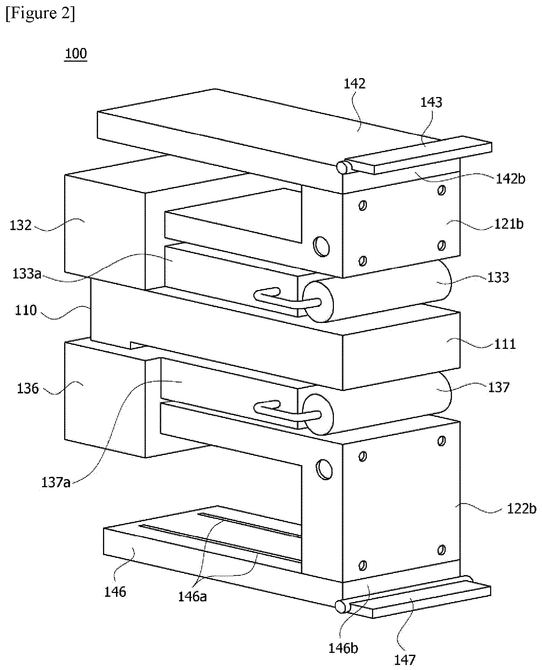

Referring to Figures 2 to 7, the taping device (100) for a stacked electrode assembly according to a preferred example of the present invention comprises a support part (110), a vacuum adsorption part (120), a taping mechanism part (130), and a gripper part (140).

The support part (110) supports the lateral side of the stacked electrode assembly (1). The support part (110) is provided with a support surface (111) that contacts the lateral side of the stacked electrode assembly (1). The support surface (111) supports a support region (A1) of the tape (T) to be attached to the stacked electrode assembly (1) (see Figure 7).

In the present example, for convenience of explanation, the position on the same virtual plane as the support surface (111) will be referred to as an "initial position (P1)" (see Figure 7).

The vacuum adsorption part (120) is provided with a vacuum adsorption surface provided on the same virtual plane as the support surface (111) to adsorb a non-pressure-sensitive adhesive side (T1) of the tape. In the present example, for convenience of explanation, the vacuum adsorption surface will be referred to separately as a first vacuum adsorption surface (121b) and a second vacuum adsorption surface (122b).

The first vacuum adsorption surface (121b) and the second vacuum adsorption surface (122b) are located on the same virtual plane as the support surface (111). The first vacuum adsorption surface (121b) and the second vacuum adsorption surface (122b) are disposed to be spaced apart up and down with the support part (110) interposed therebetween. The structure of the vacuum adsorption part (120) will be described below.

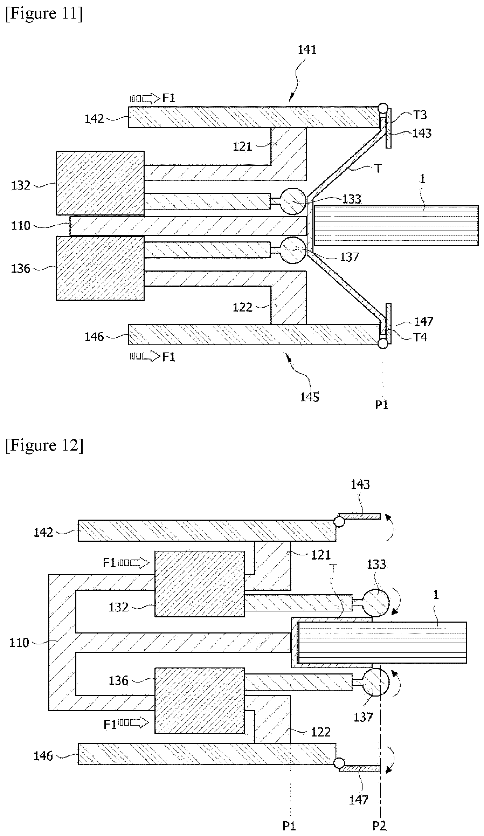

The taping mechanism part (130) may be movably coupled to the support part (110) or the vacuum adsorption part (120). Specifically, the taping mechanism part (130) may be provided to move linearly. As shown in Figures 11 and 12, the taping mechanism part (130) may pressurize the non-pressure-sensitive adhesive side (T1) of the tape while moving from the initial position (P1) to the attachment position (P2) toward the stacked electrode assembly (1), thereby operating so that the pressure-sensitive adhesive side (T2) of the tape is attached to the stacked electrode assembly (1).

At the initial position (P1), the tape (T) is positioned so that the non-pressure-sensitive adhesive side (T1) of the tape contacts the support surface (111) and the vacuum adsorption surface (121b, 122b), and the stacked electrode assembly (1) is positioned to contact the support surface (111) with the tape (T) interposed therebetween.

The taping mechanism part (130) pressurizes the non-pressure-sensitive adhesive side (T1) between the support region (A1) and the end by contacting the non-pressure-sensitive adhesive side (T1) of the tape while moving toward the stacked electrode assembly (1), thereby being provided so that the pressure-sensitive adhesive side (T2) of the tape is attached to the stacked electrode assembly (1). The structure of the taping mechanism part (130) will be described below.

Here, the end of the tape collectively refers to the upper end (T3) and lower end (T4) of the tape which are not adsorbed on the first vacuum adsorption surface (121b) and the second vacuum adsorption surface (122b). Referring to Figure 7, the upper end (T3) of the tape is a portion adjacent to the upper region (A2). The lower end (T4) of the tape is a portion adjacent to the lower region (A3).

The gripper part (140) guides movement of the tape (T) upon operation of the taping mechanism part (130), while holding the upper end (T3) of the tape that is not adsorbed to the first vacuum adsorption surface (121b) and the lower end (T4) of the tape that is not adsorbed to the second vacuum adsorption surface (122b), respectively, to move forward (F1) toward the electrode assembly (1).

The gripper part (140) holds the upper end (T3) and the lower end (T4) of the tape at the initial position (P1), respectively, and moves from the initial position (P1) to the attachment position (P2), thereby guiding movement of the tape (T) upon operation of the taping mechanism part (130), releases the upper end (T3) and the lower end (T4) of the tape at the attachment position (P2), and then is operated to return to the initial position (P1).

The gripper part (140) comprises a first gripper part (141) and a second gripper part (145). In the initial position (P1), the gripper part (140) has a first grip surface (142b) in contact with the upper end (T3) of the tape, and a second grip surface (146b), which are positioned in the same virtual plane as the support surface (111). That is, the tape before taping may be positioned and fixed in a single plane shape.

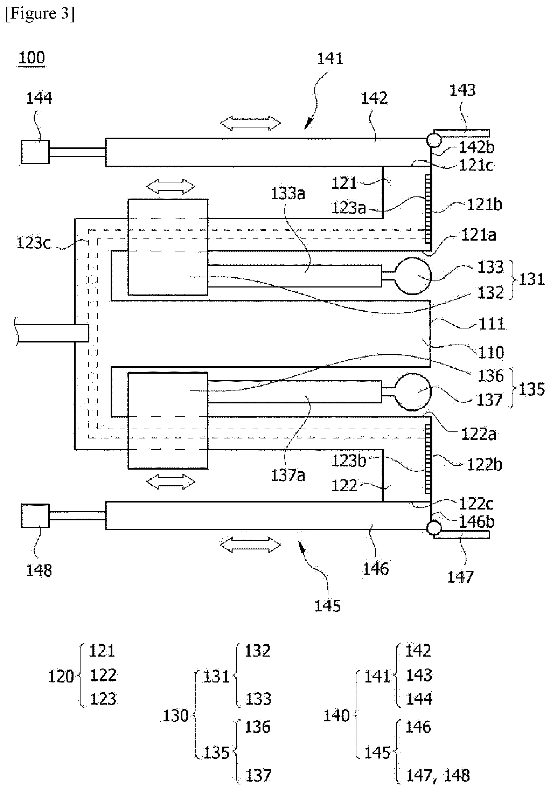

Referring to Figures 3 and 4, the first gripper part (141) is coupled to the vacuum adsorption part (120) at the top of the support part (110) to be movable back and forth. The first gripper part (141) may operate to grip the upper end (T3) of the tape that is not adsorbed to the first vacuum adsorption surface (121b), thereby moving forward (F1) toward the stacked electrode assembly (1). The first gripper part (141) may also be provided to additionally grip a partial region of the tape adsorbed on the first vacuum adsorption surface (121b).

The first gripper part (141) comprises a first guide bar (142), a first gripper bar (143), and a first grip driving part (144).

The first guide bar (142) is coupled to a first vacuum adsorption body (121) to be movable back and forth. The first guide bar (142) may be provided with a first guide rail (142a) in a direction parallel to the support part (110).

The first gripper bar (143) is rotatably coupled to one end of the first guide bar (142) on which the first grip surface (142b) of the first guide bar (142) is provided. The first gripper bar (143) contacts the first grip surface (142b) with the tape (T) interposed therebetween, while rotating toward the first grip surface (142b), thereby operating to grip the upper end (T3) of the tape. The first gripper bar (143) operates to release the upper end (T3) of the tape while rotating to be away from the first grip surface (142b).

The first grip driving part (144) is coupled to the other end of the first guide bar (142) to provide the first guide bar (142) with a driving force, thereby moving the first guide bar (142) back and forth. The first grip driving part (144) provides the first guide bar (142) with a driving force to adjust the position of the first guide bar (142). A linear motor may be used as the first grip driving part (144).

Referring to Figures 3 and 5, the second gripper part (145) is disposed to be spaced apart in parallel to the first gripper part (141) at the bottom of the support part (110). The second gripper part (145) is movably coupled to the vacuum adsorption part (120) back and forth to grip the lower end (T4) of the tape that is not adsorbed to the second vacuum adsorption surface (122b), thereby operating to move forward (F1) toward the stacked electrode assembly (1).

The second gripper part (145) comprises a second guide bar (146), a second gripper bar (147), and a second grip driving part (148).

The second guide bar (146) is coupled to a second vacuum adsorption body (122) to be movable back and forth. The second guide bar (146) is provided with a second guide rail (146a) in a direction parallel to the support part (110).

The second gripper bar (147) is rotatably coupled to one end of the second guide bar (146) on which the second grip surface (146b) of the second guide bar (146) is provided. The second gripper bar (147) contacts the second grip surface (146b) with the tape (T) interposed therebetween, while rotating toward the second grip surface (146b), thereby operating to grip the lower end (T4) of the tape. The second gripper bar (147) operates to release the lower end (T4) of the tape while rotating to be away from the second grip surface (146b).

The second grip driving part (148) is coupled to the other end of the second guide bar (146). The second grip driving part (148) is a device which provides the second guide bar (146) with a driving force to move the second guide bar (146) back and forth. The second grip driving part (148) provides the second guide bar (146) with a driving force to adjust the position of the second guide bar (146). A linear motor may be used as the second grip driving part (148).

As described above, the first gripper part (141) and the second gripper part (141) may be provided to be symmetrical up and down with respect to the support part (110). Then, it is preferable that the linear movement of the first gripper part (141) and the second gripper part (145) is performed integrally. Therefore, the driving parts (144, 148) for linear movement of the first gripper part (141) and the second gripper part (141) may also be configured as a single driving part.

Referring to Figures 3 and 4, the vacuum adsorption part (120) comprises a first vacuum adsorption body (121), a second vacuum adsorption body (122), a first nozzle (123a), a second nozzle (123b), and a vacuum pressure application member (124).

The first vacuum adsorption body (121) is disposed at the top of the support part (110). The first vacuum adsorption body (121) has an L-shaped structure. The first vacuum adsorption body (121) has a structure in which the first vacuum adsorption surface (121b) is bent upward with respect to a first opposing surface (121a). The first vacuum adsorption body (121) is coupled to the support part (110) so that the first opposing surface (121a) is spaced apart from the upper surface of the support part (110). Therefore, the support part (110) and the vacuum adsorption part (120) have an E-shaped structure, and the first vacuum adsorption body (121) and the second vacuum adsorption main body (122) are provided to be symmetrical up and down at the top and bottom of the support part (110), respectively.

Then, the first vacuum adsorption surface (121b) is formed by bending upward from the end of the first vacuum adsorption body (121), and the second vacuum adsorption surface (122b) is formed by bending downward from the end of the second vacuum adsorption body (122).

Here, the first opposing surface (121a) is a surface facing the upper surface of the support part (110). The first vacuum adsorption surface (121b) is a surface provided coaxially with the support surface (111) of the support part (110). The first vacuum adsorption surface (121b) is a portion where the non-pressure-sensitive adhesive side (T1) of the tape is adsorbed.

The first vacuum adsorption body (121) is provided with a first coupling surface (121c) that is parallel to the first opposing surface (121a), but is bent toward the top of the first vacuum adsorption surface (121b).

A plurality of first guide balls (121e) are rotatably installed on the first coupling surface (121c). The plurality of first guide balls (121e) are inserted into the first guide rail (142a) of the first gripper part (141) to guide back-and-forth movement of the first gripper part (141).

A first nozzle (123a) is built into the first vacuum adsorption body (121). The first nozzle (123a) provides the first vacuum adsorption surface (121b) with a vacuum pressure. The first nozzle (123a) is connected to a vacuum pressure applying member (124) through a pipe (123c).

Referring to Figures 3 and 5, the second vacuum adsorption body (122) is disposed at the bottom of the support part (110).

The second vacuum adsorption body (122) has an L-shaped structure. The second vacuum adsorption body (122) has a structure in which the second vacuum adsorption surface (122b) is bent downward with respect to a second opposing surface (122a). The second vacuum adsorption body (122) is coupled to the support part (110) so that the second opposing surface (122a) is spaced apart from the lower surface of the support part (110).

Here, the second opposing surface (122a) is a surface facing the lower surface of the support part (110). The second vacuum adsorption surface (122b) is a surface provided coaxially with the support surface (111) of the support part (110). The second vacuum adsorption surface (122b) is a portion where the non-pressure-sensitive adhesive side (T1) of the tape is adsorbed.

The second vacuum adsorption body (122) is provided with a second coupling surface (122c) that is parallel to the second opposing surface (122a), but is bent toward the lower part of the second vacuum adsorption surface (122b).

A plurality of second guide balls (122e) are rotatably installed on the second coupling surface (122c). The plurality of second guide balls (122e) are inserted into a second guide rail (146a) of the second gripper part (145) to guide back-and-forth movement of the second gripper part (145).

A second nozzle (123b) is built into the second vacuum adsorption body (122). The second nozzle (123b) provides the second vacuum adsorption surface (122b) with a vacuum pressure. The second nozzle (123b) is connected to the vacuum pressure applying member (124) through the pipe (123c).

The taping mechanism part (130) pressurizes and rolls the tape (T) on the upper and lower surfaces of the stacked electrode assembly (1) while moving forward toward the stacked electrode assembly (1) in an arrow F1 direction. The taping mechanism part (130) comprises a first taping mechanism part (131) and a second taping mechanism part (135).

Referring to Figures 3 and 4, the first taping mechanism part (131) is disposed at the top of the support part (110). The first taping mechanism part (131) is installed to be movable back and forth on the first vacuum adsorption body (121) between the support part (110) and the first gripper part (141).

Here, the support part (110), and the first vacuum adsorption body (121) and the second vacuum adsorption body (122) are fixed structures, where these structures may be formed as a single body. That is, the first taping mechanism part (131) and the second taping mechanism part (135) may be installed to be movable back and forth with respect to the support part (110), and the first vacuum adsorption rod body (121) and the second vacuum adsorption body (122).

The first taping mechanism part (131) pressurizes and rolls the tape (T) on the upper surface of the stacked electrode assembly (1) while moving in the movement direction of the first gripper part (141).

The first taping mechanism part (131) comprises a first moving block (132), a first pressurizing member (133), and a first block driving member (134).

The first moving block (132) is coupled to the first vacuum adsorption body (121) to be movable back and forth. The first moving block (132) comprises a first block case (132a) and at least one first block ball (132b).

A first support bar (133a) supporting the first pressing member (133) is coupled to the first block case (132a). The first block case (132a) is provided with a first through opening (reference numeral not indicated) penetrating the first vacuum adsorption body (121).

At least one first block ball (132b) is exposed to the first through opening, but is rotatably installed in the first block case (132a). At least one first block ball (132b) is connected to a first body rail (121d) of the first vacuum adsorption body (121) to guide movement of the first block case (132a). Here, the first body rail (121d) is provided on one side of the first vacuum adsorption body (121) in parallel with the support part (110).

The first block driving member (134) is coupled to the first moving block (132) to provide the first moving block (132) with a driving force. By the first block driving member (134), the first moving block (132) may be moved forward toward the stacked electrode assembly (1) in the arrow F1 direction (forward direction), or may be moved backward away from the electrode assembly (1) in the arrow F2 direction (backward direction).

The first pressurizing member (133) is coupled to the first moving block (132). The first pressurizing member (133) is disposed between the upper surface of the support part (110) and the first opposing surface (121a) of the first vacuum adsorption body (121). The first pressurizing member (133) may be either a pressurizing block or roller having a curved surface bent with a predetermined curvature.

The first pressurizing member (133) may pressurize and roll the tape (T), which is hold by the first gripper part (141) to be moved to the top of the stacked electrode assembly (1), on the upper surface of the stacked electrode assembly (1), while being moved forward by the first moving block (132) in the arrow F1 direction.

Referring to Figures 3 and 5, the second taping mechanism part (135) is disposed at the bottom of the support part (110). The second taping mechanism part (135) is installed to be movable back and forth on the second vacuum adsorption body (122) between the support part (110) and the second gripper part (145). The second taping mechanism part (135) pressurizes and rolls the tape (T) on the lower surface of the stacked electrode assembly (1) while being moved in the movement direction of the second gripper part (145). The second taping mechanism part (135) is preferably provided to be symmetrical to the first taping mechanism part (131) with respect to the support part (110).

The second taping mechanism part (135) comprises a second moving block (136), a second pressurizing member (137), and a second block driving member (138).

The second moving block (136) is coupled to the second vacuum adsorption body (122) to be movable back and forth. The second moving block (136) comprises a second block case (136a), and at least one second block ball (136b).

A second support bar (137a) supporting the second pressurizing member (137) is coupled to the second block case (136a). The second block case (136a) is provided with a second through opening penetrating the second vacuum adsorption body (122).

At least one second block ball (136b) is exposed through a second through opening (reference numeral not indicated), but is rotatably installed in the second block case (136a). At least one second block ball (136b) is connected to a second body rail (122d) of the second vacuum adsorption body (122) to guide movement of the second block case (136a). Here, the second body rail (122d) is provided on one side of the second vacuum adsorption body (122) in parallel with the support part (110).

The second block driving member (138) is coupled to the second moving block (136) to provide the second moving block (136) with a driving force. By the second block driving member (138), the second moving block (136) may be moved forward toward the stacked electrode assembly (1) in the arrow F1 direction, or may be moved backward away from the stacked electrode assembly (1) in the arrow F2 direction.

The second pressurizing member (137) is coupled to the second moving block (136). The second pressurizing member (137) is disposed between the lower surface of the support part (110) and the second opposing surface (122a) of the second vacuum adsorption body (122). The second pressurizing member (137) may be either a pressurizing block or roller having a curved surface bent with a predetermined curvature.

The second pressurizing member (137) pressurizes and rolls the tape (T), which is hold by the second gripper part (145) to be moved to the bottom of the stacked electrode assembly (1), on the lower surface of the stacked electrode assembly (1), while being moved forward by the second moving block (136) in the arrow F1 direction.

The first pressurizing member (133) and the second pressurizing member (137) are preferably installed spaced apart within a range without damaging the stacked electrode assembly (1) upon pressurizing and rolling the stacked electrode assembly (1). The gap between the first pressurizing member (133) and the second pressurizing member (137) is within the thickness range of the stacked electrode assembly (1). Depending on the standard of the stacked electrode assembly (1), the installation interval between the first pressurizing member (133) and the second pressurizing member (137) may be adjusted.

Meanwhile, the first pressurizing member (133) and the second pressurizing member (137) attach the tape to the upper and lower surfaces of the stacked electrode assembly (1) while rolling, which may be provided to roll the upper and lower surfaces of the stacked electrode assembly (1) while pressurizing. That is, the first pressurizing member (133) and the second pressurizing member (137) move forward along the upper and lower surfaces of the stacked electrode assembly (1) and simultaneously roll. In this instance, the first pressurizing member (133) and the second pressurizing member (137) are elastically supported, thereby pressurizing the upper and lower surfaces of the stacked electrode assembly (1) by an elastic force.

That is, the initial gap between the first pressurizing member (133) and the second pressurizing member (137) is smaller than the thickness of the stacked electrode assembly (1), and as the taping is performed, the gap may be increased by the elastic force, so that the first pressurizing member (133) and the second pressurizing member (137) pressurize the stacked electrode assembly (1) up and down. Through this, it is possible to effectively perform the taping from start to finish.

Hereinafter, with reference to Figures 8 to 13, a method of taping a stacked electrode assembly (1), in which a tape (T) is adhered to a stacked electrode assembly (1) using a taping device (100) for a stacked electrode assembly, will be explained.

As shown in Figure 8, a pair of pressurizing members (133, 137) and a pair of gripper parts (140) are aligned at an initial position (P1). Here, the initial position (P1) is a position coaxial with the support surface (111) of the support part (110). That is, it is a position on the same plane. The pair of pressurizing members (133, 137) is divided into a first pressurizing member (133) and a second pressurizing member (137) depending on the installation position. That is, the support part (111) supports the central portion of the tape, and the pair of gripper parts (140) fix the upper and lower ends of the tape.

When the vacuum pressure is applied from the vacuum adsorption part (120) to the first nozzle (123a) and the second nozzle (123b), the non-pressure-sensitive adhesive side (T1) of the tape is adsorbed on the first vacuum adsorption surface and the second vacuum adsorption surface of the vacuum adsorption part (120). In this instance, the first gripper bar (143) and the second gripper bar (147) are in an unfolded state.

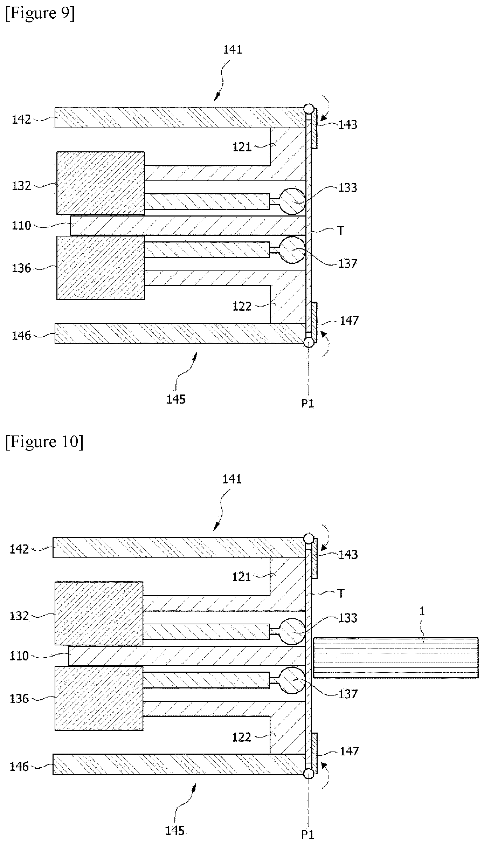

Referring to Figure 9, in a state where the non-pressure-sensitive adhesive side (T1) of the tape is adsorbed on the vacuum adsorption part (120), the first gripper bar (143) rotates toward the first grip surface (142b) of the first guide bar (142). The first gripper bar (143) contacts the first grip surface (142b) with the tape (T) interposed therebetween to grip the upper end of the tape (T).

The second gripper bar (147) rotates toward the second grip surface (146b) of the second guide bar (146). The second gripper bar (147) contacts the second grip surface (146b) with the tape (T) interposed therebetween to grip the lower end of the tape (T).

The first gripper bar (143) and the second gripper bar (147) grip the upper and lower ends of the tape (T) adsorbed on the vacuum adsorption part (120) while operating simultaneously.

Therefore, on the upper and lower ends of the tape (T), the fixation by vacuum adsorption and the fixation by the gripper bars (143, 147) are performed. At this time, even if a problem occurs in the vacuum adsorption, the fixation of the tape by the gripper bars is performed, so that effective and stable attachment of the tape can be performed.

Referring to Figure 10, in a state where the upper and lower ends of the tape (T) are held by the first gripper part (141) and the second gripper part (145), the stacked electrode assembly (1) is disposed to contact the support part (110) with the tape (T) interposed therebetween.

The lateral side of the stacked electrode assembly (1) contacts with the support surface (111) with the tape (T) interposed therebetween. At this time, the central portion of the tape (T) may be in a state fixed to the lateral side of the stacked electrode assembly (1) by the support part (110).

The stacked electrode assembly (1) may be transferred by a rail, belt, or linear moving device in a state of being supported on a pallet to be disposed in contact with the support part (110). Of course, a certain gap may be formed between the lateral side of the stacked electrode assembly (1) and the tape (T). This is to ensure that the electrode assembly (1) is transferred in a direction to intersect regarding the taping device (100). Such a certain gap can be filled in a process that the taping is performed. Then, in the taping process, the electrode assembly (1) can be fixed so that it does not move back and forth with respect to the taping device (100).

Referring to Figure 11, when the lateral side of the stacked electrode assembly (1) is supported on the support surface (111) of the support part (110), the first gripper part (141) and the second gripper part (145) grip the upper and lower ends of the tape (T) to be moved forward toward the stacked electrode assembly (1) in the arrow F1 direction. In this instance, the tape (T) may be separated from the first vacuum adsorption surface and the second vacuum adsorption surface of the vacuum adsorption part (120) to be moved from the initial position (P1) to the attachment position (P2) by the pair of gripper parts (140). At this time, a tensile force is generated overall on the tape (T). In addition, the central portion of the tape (T) moves forward a certain distance, because both ends of the tape (T) move forward. Therefore, during the forward movement process of the pair of gripper parts (140), the central portion of the tape (T) may be attached to the lateral side of the stacked electrode assembly (1). Such a process is shown in Figure 11.

As a pair of gripper parts (140) hold the upper and lower ends of the tape (T) to guide the movement of the tape (T) while moving forward toward the stacked electrode assembly (1) in the arrow F1 direction, the present invention can prevent the tape (T) from being separated from the stacked electrode assembly (1), even if the vacuum is released from the vacuum adsorption part (120) so that the tape (T) is separated from the vacuum adsorption part (120). Then, as both ends of the tape (T) are moved forward, the tape (T) is tensioned. Therefore, the tape (T) is then attached in an overall tensioned state, so that it is possible to effectively prevent problems such as the tape (T) being folded and attached, air intervening on the adhesive surface, and the tape wrinkling.

Referring to Figure 12, the first taping mechanism part (131) and the second taping mechanism part (135) move forward in the arrow F1 direction. Specifically, the first moving block (132) moves forward along the first body rail (121d) of the first vacuum adsorption body (121).

In this instance, the first pressurizing member (133) pressurizes and rolls the tape (T) on the upper surface of the stacked electrode assembly (1), while being moved forward by the first moving block (132) in the arrow F1 direction, and simultaneously pushing the non-pressure-sensitive adhesive side (T1) of the tape from the initial position (P1) to the attachment position (P2). Accordingly, the pressure-sensitive adhesive side (T2) of the tape is adhered to the upper surface of the stacked electrode assembly (1).

The second moving block (136) moves forward along the second body rail (122d) of the second vacuum adsorption body (122) in the arrow F1 direction. At this time, the second pressurizing member (137) pressurizes and rolls the tape (T) on the lower surface of the stacked electrode assembly (1), while being moved forward by the second moving block (136), and simultaneously pushing the non-pressure-sensitive adhesive side (T1) of the tape from the initial position (P1) to the attachment position (P2). Accordingly, the pressure-sensitive adhesive side (T2) of the tape is adhered to the lower surface of the stacked electrode assembly (1).

Meanwhile, the tape (T) may have a strip shape where the top and bottom lengths are longer than the width. A plurality of such tapes (T) may be taped at intervals in the longitudinal direction of the stacked electrode assembly (1). That is, a plurality of devices taping one stacked electrode assembly (1) may be provided in the longitudinal direction of the electrode assembly (1).

The pallet supporting and simultaneously transferring the electrode assembly (1) may support the electrode assembly (1) in a fork shape. Therefore, the taping may be performed on the side where the electrode assembly (1) is not supported. That is, the overall cross-section of the taping device may be the same as the strip-shaped tape (T), and its width may preferably be smaller than the gap between the electrode assemblies (1) that are not supported on the pallet.

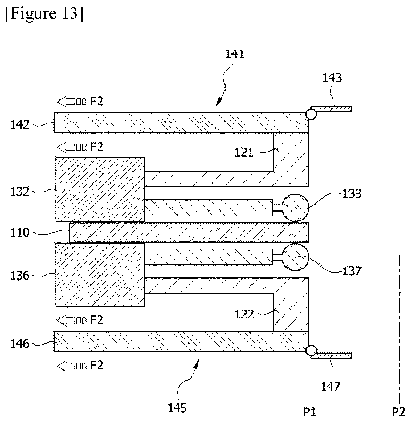

Referring to Figure 13, when the taping process for the stacked electrode assembly (1) is completed, the first gripper part (141), the second gripper part (145), the first taping mechanism part (131), and the second taping mechanism part (135) are moved backward from the attachment position (P2) to the initial position (P1) in the arrow F2 direction. Then, it is preferable that the electrode assembly (1), on which the taping has been completed, is transferred for the next fixation.

According to one example of the present invention, in the taping process of the stacked electrode assembly, the gripper part grips the upper and lower ends of the tape to guide the movement of the tape while moving forward toward the stacked electrode assembly, so that even if the vacuum is released in the vacuum adsorption part, and thus the tape is separated from the vacuum adsorption part, it is possible to prevent the tape from being separated from the stacked electrode assembly.

According to one example of the present invention, a pair of pressurizing members pressurizes and rolls the tape while moving forward toward the stacked electrode assembly, and simultaneously attaches the tape to the stacked electrode assembly, so that it is possible to increase the adhesive strength of the tape to the stacked electrode assembly.

According to one example of the present invention, the gripper part guides the movement of the tape, and a pair of pressurizing members pressurizes and rolls the tape onto the stacked electrode assembly, it is possible to prevent wrinkles and bubble generation of the tape conventionally generated when the tape has been attached to the stacked electrode assembly.

### Industrial Applicability

It is described in the detailed description of invention.

## Claims

1. A taping device (100) for a stacked electrode assembly (1) comprising:
a support part (110) provided to correspond to a central portion of a tape to be attached to the stacked electrode assembly (1) and a lateral side of the stacked electrode assembly (1);
a vacuum adsorption part (120) arranged to adsorb and fix a non-pressure-sensitive adhesive side of the tape,
a gripper part (140) arranged to grip ends of the tape so as to further fix the tape, and configured to advance from an initial position (P1) of the tape before taping to move to an attachment position (P2) for taping, thereby applying tension to the tape,
wherein the initial position (P1) refers to a position on the same virtual plane as a support surface (111) of the support part (110) configured to support a support region (A1) of the tape; and
a taping mechanism part (130) provided to attach the tape to an upper surface and a lower surface of the stacked electrode assembly (1) by moving along the upper surface and the lower surface of the stacked electrode assembly (1) from an upper portion and a lower portion of the support part (110).

2. The taping device (100) for a stacked electrode assembly (1) according to claim 1,
wherein, in the initial position (P1) of the tape before taping, the support surface (111) and a vacuum adsorption surface of the vacuum adsorption part (120) form the same plane.

3. The taping device (100) for a stacked electrode assembly (1) according to claim 2,
wherein, in the initial position (P1) of the tape before taping, the lateral side of the stacked electrode assembly (1) is positioned to contact the support surface (111) with the tape interposed therebetween.

4. The taping device (100) for a stacked electrode assembly (1) according to claim 1,
wherein the vacuum adsorption part (120) and the gripper part (140) are provided in pairs symmetrically up and down with respect to the support part (110).

5. The taping device (100) for a stacked electrode assembly (1) according to claim 4,
wherein the support part (110) and the vacuum adsorption part (120) are integrally formed in an E shape, and the gripper part (140) and the taping mechanism part (130) are provided to be movable back and forth with respect to the support part (110) and the vacuum adsorption part (120).

6. The taping device (100) for a stacked electrode assembly (1) according to claim 1,
wherein the gripper part (140) deforms the upper portion and the lower portion of the tape from a vertical shape to an oblique line shape with respect to the support part (110) while moving to the attachment position (P2).

7. The taping device (100) for a stacked electrode assembly (1) according to claim 1,
wherein the gripper part (140) comprises a gripper surface on which the end of the tape is seated, and a gripper bar (143, 147) provided to be foldable with respect to the gripper surface, thereby fixing and unfixing the end of the tape.

8. The taping device (100) for a stacked electrode assembly (1) according to claim 7,
wherein the gripper part (140) comprises a guide bar (142, 146) provided to be movable back and forth on the vacuum adsorption part (120).

9. The taping device (100) for a stacked electrode assembly (1) according to claims 1, 6 to 8,
wherein the gripper part (140) releases the fixation to the end of the tape after moving to the attachment position (P2).

10. The taping device (100) for a stacked electrode assembly (1) according to claims 1 to 9,
wherein the taping mechanism part (130) comprises:
a moving block (132, 136) provided to move back and forth with respect to the support part (110); and
a pressurizing member (133, 137) provided so that the tape is pressurized while moving back and forth by the moving block, and simultaneously attached to the stacked electrode assembly (1).

11. The taping device (100) for a stacked electrode assembly (1) according to claim 10,
wherein the taping mechanism part (130) comprises a support bar interposed between the moving block and the pressurizing member, and
the pressurizing member is a roller (133, 137) rotatably provided on the support bar.

12. The taping device (100) for a stacked electrode assembly (1) according to claim 11,
wherein the roller (133, 137) is elastically supported to be rotatable with respect to the support bar, and the roller performs the taping while pressurizing and rolling the surface of the stacked electrode body by an elastic restoring force.

13. The taping device (100) for a stacked electrode assembly (1) according to claim 1,
wherein
the tape is tensioned by moving from the initial position (P1) of the gripper part (140) to the attachment position (P2) of the gripper part (140) for attachment of the tape; and
the gripper part (140) is provided in a pair to be symmetrical up and down with respect to the support part to additionally fix upper and lower ends of the tape in addition to the fixation by the vacuum adsorption part (120).

14. The taping device (100) for a stacked electrode assembly (1) according to claim 13,
wherein, when the gripper part (140) moves from the initial position (P1) to the attachment position (P2), the adsorption of the vacuum adsorption part (120) is released, and/or
wherein, when attachment of the tape through the taping mechanism part (130) begins after the gripper part (140) is moved to the attachment position (P2), the fixation of the tape through the gripper part (140) is released.

## Patentansprüche

1. Bandvorrichtung (100) für eine gestapelte Elektrodenanordnung (1), aufweisend:
ein Trägerteil (110), das eingerichtet ist, um einem zentralen Abschnitt eines Bandes, das an der gestapelten Elektrodenanordnung (1) anzubringen ist, und einer lateralen Seite der gestapelten Elektrodenanordnung (1) zu entsprechen;
ein Vakuumadsorptionsteil (120), das eingerichtet ist, um eine nicht druckempfindliche Klebeseite des Bandes zu adsorbieren und zu fixieren,
ein Greiferteil (140), das eingerichtet ist, um Enden des Bandes zu greifen, um das Band zusätzlich zu fixieren, und das eingerichtet ist, um sich vor dem Bandziehen von einer Anfangsposition (P1) des Bandes weg zu bewegen, um zu einer Anbringungsposition (P2) für das Bandziehen zu gelangen, wodurch eine Spannung auf das Band ausgeübt wird,
wobei sich die Anfangsposition (P1) auf eine Position auf derselben Ebene wie eine Stützfläche (111) des Trägerteils (110) bezieht, die eingerichtet ist, um einen Stützbereich (A1) des Bandes zu stützen; und
ein Bandziehmechanismusteil (130), das eingerichtet ist, um das Band an einer oberen Fläche und einer unteren Fläche der gestapelten Elektrodenanordnung (1) anzubringen, indem es sich von einem oberen Abschnitt und einem unteren Abschnitt des Trägerteils (110) aus entlang der oberen Fläche und der unteren Fläche der gestapelten Elektrodenanordnung (1) bewegt.

2. Bandvorrichtung (100) für eine gestapelte Elektrodenanordnung (1) nach Anspruch 1,
wobei, vor dem Bandziehen, in der Anfangsposition (P1) des Bandes, die Stützfläche (111) und eine Vakuumadsorptionsfläche des Vakuumadsorptionsteils (120) eine Ebene bilden.

3. Bandvorrichtung (100) für eine gestapelte Elektrodenanordnung (1) nach Anspruch 2,
wobei, vor dem Bandziehen, in der Anfangsposition (P1) des Bandes, die laterale Seite der gestapelten Elektrodenanordnung (1) so positioniert ist, um die Stützfläche (111) mit dem dazwischen liegenden Band zu kontaktieren.

4. Bandvorrichtung (100) für eine gestapelte Elektrodenanordnung (1) nach Anspruch 1,
wobei das Vakuumadsorptionsteil (120) und das Greiferteil (140) paarweise oben und unten symmetrisch bezüglich des Trägerteils (110) bereitgestellt sind.

5. Bandvorrichtung (100) für eine gestapelte Elektrodenanordnung (1) nach Anspruch 4,
wobei das Trägerteil (110) und das Vakuumadsorptionsteil (120) integral in einer E-Form ausgebildet sind, und das Greiferteil (140) und das Bandziehmechanismusteil (130) relativ zu dem Trägerteil (110) und dem Vakuumadsorptionsteil (120) vor und zurück bewegbar eingerichtet sind.

6. Bandvorrichtung (100) für eine gestapelte Elektrodenanordnung (1) nach Anspruch 1,
wobei das Greiferteil (140) den oberen Abschnitt und den unteren Abschnitt des Bandes von einer vertikalen Form zu einer schrägen Linienform bezüglich des Trägerteils (110) verformt, während es sich zu der Anbringungsposition (P2) bewegt.

7. Bandvorrichtung (100) für eine gestapelte Elektrodenanordnung (1) nach Anspruch 1,
wobei das Greiferteil (140) eine Greiferfläche, auf der das Ende des Bandes sitzt, und eine Greiferstange (143, 147) aufweist, die vorgesehen ist, um relativ zu der Greiferfläche faltbar zu sein, wodurch das Ende des Bandes fixiert und defixiert wird.

8. Bandvorrichtung (100) für eine gestapelte Elektrodenanordnung (1) nach Anspruch 7,
wobei das Greiferteil (140) eine Führungsstange (142, 146) aufweist, die eingerichtet ist, um auf dem Vakuumadsorptionsteil (120) vor und zurück bewegbar zu sein.

9. Bandvorrichtung (100) für eine gestapelte Elektrodenanordnung (1) nach einem der Ansprüche 1, 6 bis 8,
wobei das Greiferteil (140) die Fixierung an dem Ende des Bandes löst, nachdem es sich zu der Anbringungsposition (P2) bewegt hat.

10. Bandvorrichtung (100) für eine gestapelte Elektrodenanordnung (1) nach einem der Ansprüche 1 bis 9,
wobei das Bandmechanismusteil (130) aufweist:
einen Bewegungsblock (132, 136), der eingerichtet ist, sich relativ zu dem Trägerteil (110) vor und zurück zu bewegen; und
ein Druckbeaufschlagungselement (133, 137), das eingerichtet ist, so dass das Band unter Druck gesetzt wird, während es sich durch den Bewegungsblock vor und zurück bewegt, und gleichzeitig an der gestapelten Elektrodenanordnung (1) angebracht wird.

11. Bandvorrichtung (100) für eine gestapelte Elektrodenanordnung (1) nach Anspruch 10,
wobei das Bandmechanismusteil (130) eine Tragstange aufweist, die zwischen dem Bewegungsblock und dem Druckbeaufschlagungselement liegt, und
das Druckbeaufschlagungselement eine Rolle (133, 137) ist, die drehbar an der Tragstange bereitgestellt ist.

12. Bandvorrichtung (100) für eine gestapelte Elektrodenanordnung (1) nach Anspruch 11,
wobei die Rolle (133, 137) elastisch getragen wird, um relativ zu der Tragstange drehbar zu sein, und die Rolle das Bandziehen durchführt, während sie die Fläche des gestapelten Elektrodenkörpers durch eine elastische Rückstellkraft unter Druck setzt und rollt.

13. Bandvorrichtung (100) für eine gestapelte Elektrodenanordnung (1) nach Anspruch 1, wobei
das Band gespannt wird, indem es sich von der Anfangsposition (P1) des Greiferteils (140) zu der Anbringungsposition (P2) des Greiferteils (140) für die Anbringung des Bandes bewegt; und
das Greiferteil (140) paarweise oben und unten symmetrisch bezüglich des Trägerteils bereitgestellt ist, um zusätzlich zu der Fixierung durch das Vakuumadsorptionsteil (120) obere und untere Enden des Bandes zu fixieren.

14. Bandvorrichtung (100) für eine gestapelte Elektrodenanordnung (1) nach Anspruch 13,
wobei, wenn sich das Greiferteil (140) von der Anfangsposition (P1) zu der Anbringungsposition (P2) bewegt, die Adsorption des Vakuumadsorptionsteils (120) gelöst wird, und/oder
wobei, wenn die Anbringung des Bandes durch das Bandziehmechanismusteil (130) beginnt, nachdem das Greiferteil (140) zu der Anbringungsposition (P2) bewegt wurde, die Fixierung des Bandes durch das Greiferteil (140) gelöst wird.

## Revendications

1. Dispositif d'application d'un ruban adhésif (100) pour un ensemble d'électrodes empilées (1) comprenant :
une partie de support (110) agencée afin qu'elle corresponde à une partie centrale d'un ruban à fixer sur l'ensemble d'électrodes empilées (1), ainsi qu'à un côté latéral de l'ensemble d'électrodes empilées (1) ;
un élément d'adsorption sous vide (120) agencé pour adsorber et fixer une face adhésive non sensible à la pression du ruban,
un élément de préhension (140) agencé pour saisir les bouts du ruban de façon à renforcer l'adhérence du ruban, et configuré pour avancer d'une position initiale (P1) du ruban avant l'application du ruban, pour se déplacer vers une position de fixation (P2) pour l'application du ruban, en mettant ainsi le ruban sous tension,
la position initiale (P1) se rapportant à une position sur le même plan virtuel qu'une surface de support (111) de la partie de support (110) configurée pour supporter une zone de support (A1) du ruban ; et
un élément de mécanisme d'application du ruban (130) agencé pour fixer le ruban sur une surface supérieure et une surface inférieure de l'ensemble d'électrodes empilées (1) en se déplaçant le long de la surface supérieure et de la surface inférieure de l'ensemble d'électrodes empilées (1) depuis une partie supérieure et une partie inférieure de la partie de support (110).

2. Dispositif d'application d'un ruban adhésif (100) pour un ensemble d'électrodes empilées (1) selon la revendication 1,
dans lequel, dans la position initiale (P1) du ruban avant l'application du ruban adhésif, la surface de support (111) et une surface d'adsorption sous vide de la partie d'adsorption sous vide (120) forment le même plan.

3. Dispositif d'application d'un ruban adhésif (100) pour un ensemble d'électrodes empilées (1) selon la revendication 2,
dans laquelle, dans la position initiale (P1) du ruban avant l'application du ruban adhésif, le côté latéral de l'ensemble d'électrodes empilées (1) est positionné pour entrer en contact avec la surface de support (111), le ruban étant intercalé entre eux.

4. Dispositif d'application d'un ruban adhésif (100) pour un ensemble d'électrodes empilées (1) selon la revendication 1,
dans lequel la partie d'adsorption sous vide (120) et l'élément de préhension (140) sont disposés en paires symétriquement en haut et en bas relativement à la partie de support (110).

5. Dispositif d'application d'un ruban adhésif (100) pour un ensemble d'électrodes empilées (1) selon la revendication 4,
la partie de support (110) et la partie d'adsorption sous vide (120) étant réalisées de façon intégrale sous forme de E, et l'élément de préhension (140) et l'élément de mécanisme d'application du ruban (130) étant agencés afin de pouvoir être déplacés dans les deux sens relativement à la partie de support (110) et à la partie d'adsorption sous vide (120).

6. Dispositif d'application d'un ruban adhésif (100) pour un ensemble d'électrodes empilées (1) selon la revendication 1,
l'élément de préhension (140) déformant la partie supérieure et la partie inférieure du ruban d'une forme verticale à une forme à ligne oblique relativement à la partie de support (110) tout en se déplaçant vers la position de fixation (P2).

7. Dispositif d'application d'un ruban adhésif (100) pour un ensemble d'électrodes empilées (1) selon la revendication 1,
l'élément de préhension (140) comprenant une surface de l'élément de préhension sur laquelle est situé le bout du ruban, et une barre de préhension (143, 147) agencée pour pouvoir être pliée relativement à la surface de préhension, en fixant et en détachant ainsi le bout du ruban.

8. Dispositif d'application d'un ruban adhésif (100) pour un ensemble d'électrodes empilées (1) selon la revendication 7,
l'élément de préhension (140) comprenant une barre de guidage (142, 146) agencée pour pouvoir être déplacée dans les deux sens sur la partie d'adsorption sous vide (120).

9. Dispositif d'application d'un ruban adhésif (100) pour un ensemble d'électrodes empilées (1) selon les revendications 1, 6 à 8,
l'élément de préhension (140) libérant la fixation à l'extrémité du ruban après son déplacement vers la position de fixation (P2).

10. Dispositif d'application d'un ruban adhésif (100) pour un ensemble d'électrodes empilées (1) selon les revendications 1 à 9,
la partie du mécanisme d'application du ruban (130) comprenant :
un bloc mobile (132, 136) agencé pour se déplacer dans les deux sens relativement à la partie de support (110) ; et
un élément pressurisant (133, 137) agencé de sorte que le ruban soit sous pression lors de son déplacement dans les deux sens par le bloc mobile, et fixé simultanément à l'ensemble d'électrodes empilées (1).

11. Dispositif d'application d'un ruban adhésif (100) pour un ensemble d'électrodes empilées (1) selon la revendication 10,
la partie du mécanisme d'application du ruban (130) comprenant une barre de support intercalée entre le bloc mobile et l'élément pressurisant, et
l'élément pressurisant étant un rouleau (133, 137) agencé en rotation sur la barre de support.

12. Dispositif d'application d'un ruban adhésif (100) pour un ensemble d'électrodes empilées (1) selon la revendication 11,
le rouleau (133, 137) étant soutenu élastiquement pour être rotatif relativement à la barre de support, et le rouleau effectuant l'application du ruban tout en mettant sous pression et en roulant la surface du corps d'électrode empilé par une force de rappel élastique.

13. Dispositif d'application d'un ruban adhésif (100) pour un ensemble d'électrodes empilées (1) selon la revendication 1,
le ruban se tendant en se déplaçant de la position initiale (P1) de la partie de préhension (140) à la position de fixation (P2) de la partie de préhension (140) pour l'application du ruban ; et
la partie de préhension (140) étant agencée en paire de façon à être symétrique du haut en bas relativement à la partie de support afin de fixer en plus les extrémités supérieure et inférieure du ruban en plus de la fixation par la partie d'adsorption sous vide (120).

14. Dispositif d'application d'un ruban adhésif (100) pour un ensemble d'électrodes empilées (1) selon la revendication 13,
dans lequel, lorsque la partie de préhension (140) se déplace de la position initiale (P1) à la position de fixation (P2), l'adsorption de la partie d'adsorption sous vide (120) est relâchée, et/ou
dans lequel, lorsque l'application du ruban par le biais de l'élément du mécanisme d'application du ruban (130) commence après le déplacement de la partie de préhension (140) vers la position de fixation (P2), la fixation du ruban par le biais de la partie de préhension (140) est relâchée.
